# EUROPEAN PATENT SPECIFICATION

(11) **EP 1 907 185 B1**
(45) Date of publication and mention of the grant of the patent: **11.01.2012**
(21) Application number: 06742451.5
(22) Date of filing: 07.06.2006
(51) Int. Cl.: B29C 39/02, G01N 1/28, G21C 17/00

(54) **MOULDING DEVICE**
FORMUNGSVORRICHTUNG
DISPOSITIF DE MOULAGE

(30) Priority: 07.06.2005 DK 200500830
(43) Date of publication of application: 09.04.2008
(73) Proprietor: Force Technology, 2605 Brøndby (DK)
(72) Inventor: HANSEN, Peder, Bent, SE-217 74 Malmö (SE); ANDREASEN, Lars, Bo, DK-2630 Taastrup (DK); DALHOFF, Finn, DK-2730 Herlev (DK); EGENFELDT, Svend, DK-3450 Allerød (DK); OLSEN, Hans-Ole, DK-4330 Hvalsø (DK)
(74) Representative: Hendriksen, David
(86) International application number: PCT/DK2006/000316
(87) International publication number: WO 2006/131117

(56) References cited:
- DD-A1- 240 970
- DE-A1- 2 358 802
- DE-A1- 19 905 761
- GB-A- 2 366 620
- US-A- 4 303 608
- US-A- 5 344 302
- PATENT ABSTRACTS OF JAPAN vol. 2000, no. 03, 30 March 2000 (2000-03-30) -& JP 11 352051 A (HITACHI LTD), 24 December 1999 (1999-12-24)
- PATENT ABSTRACTS OF JAPAN vol. 2003, no. 12, 5 December 2003 (2003-12-05) -& JP 2003 255074 A (HITACHI LTD), 10 September 2003 (2003-09-10)
- PATENT ABSTRACTS OF JAPAN vol. 1996, no. 04, 30 April 1996 (1996-04-30) -& JP 07 325184 A (TOSHIBA CORP), 12 December 1995 (1995-12-12)
- PATENT ABSTRACTS OF JAPAN vol. 1998, no. 02, 30 January 1998 (1998-01-30) -& JP 09 269284 A (MITSUBISHI HEAVY IND LTD), 14 October 1997 (1997-10-14)

## Description

### FIELD OF THE INVENTION

The invention relates to a moulding device for making a cast of a surface, the moulding device comprising a first moulding chamber part adapted to seal off a predetermined part of the surface, fixation means for fixating said first moulding chamber part to the surface so that said first moulding chamber part together with the surface forms a moulding chamber, and an inlet allowing the introduction of moulding material into said moulding chamber. The invention moreover relates to a method of making a cast of at least part of a surface.

### BACKGROUND OF THE INVENTION

If a surface is hardly accessible, e.g. due to the geometry or location thereof or due to radioactivity, inspection of the surface typically is performed by use of specialized equipment. Tools for remote inspection of a surface by making a cast thereof for later visual analysis of the cast are well-known in the art as described below.

EP 0 337 700 A2 describes an apparatus for inspecting the inside surface of a tubular member. A permanent, negative replica image of the surface to be inspected is created. The apparatus is adapted to be inserted into the tubular member and comprises two flanges that are arranged to create a cavity together with an axle of the apparatus and the inner surface of the tubular member. A moulding material can be injected into the cavity and cured into a cast. Thereafter, the cast can be removed together with the apparatus for later inspection thereof. Even though the apparatus of EP 0 337 700 A2 is meant to be used inside nuclear reactor steam generator tubes, EP 0 337 700 A2 does not describe the possibility of using the apparatus inside a tube containing liquid. EP 0 337 700 does not describe a quality test of said cast.

Further, EP 0 337 700 does not describe means for improving the quality of the cast.

US 5,344,302 describes a tool for remotely obtaining an impression of a component surface. The tool comprises a rod and a moulding plate connected to the rod. The moulding plate has means for guiding the placement of thereof in relation to the component and means for sealing off a moulding chamber, when the moulding plate is placed against the component. Moulding material can be introduced into the moulding chamber to make the impression of the component. After hardening of the moulding material to a cast, it can be removed for inspection. US 5,344,302 does not describe the possibility of using the tool to component surfaces submerged in liquid. Moreover, US 5,344,302 does not describe the possibility of using the tool for investigating surfaces having cavities. US 5,344,302 does not describe a quality test of said cast. Further, US 5,344,302 does not describe means for improving the quality of the cast.

JP 11 352051 discloses a method and system for inspection of corrosion-damage in the water-immersed part of an atomic power plant by casting a replica of the surface under inspection. However, JP 11 352051 does not describe a quality test of said cast. Further, JP 11 352051 does not describe means for improving the quality of the cast.

US 4,303,608 discloses an apparatus and a method for measuring surface roughness and more particularly to a means for replicating the surfaces of ships in an underwater environment. However, US 4,303,608 does not describe a quality test of said cast. Further, US 4,303,608 does not describe means for improving the quality of the cast.

DE 23 58 802 discloses a method for discovery and identification of damages in a void and more particularly in a heat pipe. However, DE 23 58 802 does not describe a quality test of said cast. Further, DE 23 58 802 does not describe means for improving the quality of the cast.

JP 2003 255074 discloses a system for underwater replica fabrication of a surface, e.g. in or around a reactor, comprising a head connected to a replica fluid container through a supply nozzle, said head can be fixated to a sample surface via plinth and actuators. However, JP 2003 255074 does not describe a quality test of said cast. Further, JP 2003 255074 does not describe means for improving the quality of the cast.

GB 2,366,620 discloses an apparatus for picking up a (plurality of) defective portion replica, said apparatus picks up a replica of a defective portion present on a surface of a structure to be inspected and inspects the occurrence of damage to the structure. However, GB 2,366,620 does not describe a quality test of said cast. Further, GB 2,366,620 does not describe means for improving the quality of the cast.

JP 2003262695 describes a system for remote underwater inspection of a reactor. However, JP 2003262695 does not describe a quality test of said cast. Further, JP 2003262695 does not describe means for improving the quality of the cast.

### SUMMARY OF THE INVENTION

Consequently, it is an object of the invention to provide a device for making a cast of a surface or a component that is fully or partly submerged under water or another liquid. It is another object of the invention to provide a device for making a high quality cast of a surface or a component, no matter if the surface or component is submerged under liquid or is surrounded by gas. These objects are achieved, when the moulding device mentioned in the opening paragraph is further comprising at least one outlet arranged to let out any fluid present in said moulding chamber from said moulding chamber.

It should be noted, that the moulding device is arranged for creating a cast of the surface: the moulding device is arranged for being fixated to the surface to be inspected, moulding material is filled into the moulding chamber created between the moulding device and the surface, to which the moulding device is fixated; subsequently the moulding material is left to cure for a predetermined amount of time. This cured moulding material forms the cast, which can be inspected to give indications of cracks and other defects of the surface.

By the presence of at least one outlet, the first moulding chamber part can be placed at and fixed to a surface submerged in liquid, in that any liquid trapped inside the moulding chamber formed by the first moulding chamber part and the surface has the possibility to escape or to be drained from the moulding chamber. Even if the surface is not submerged in liquid, the outlet of the moulding chamber is advantageous to ensure the quality of a cast, in that gas present in the moulding chamber would disturb the quality of the cast, e.g. by forming gas bubbles in the moulding chamber. The device can comprise means for draining fluid inside the moulding chamber. Alternatively, any fluid present in the moulding chamber can be removed by the moulding material introduced into the moulding chamber forcing the fluid out. It should be noted that the term "fluid" is meant to cover any liquid or gas. Further, the moulding device comprises at least one test piece with surface defects having well-known characteristics for making at least one imprint on said cast of said surface. Thereby the cast may be marked with an imprint from the test piece and the quality/detail of the imprint in the cast may be used to determine the quality/detail of the cast itself.

In one embodiment said at least one test piece with surface defects having well-known characteristics is placed such that it will leave an imprint on a side of the cast facing away from said surface. Thereby the test piece may be placed in a position where it is in contact with the opposite side of the mould/cast as is the surface from which the cast/mould is made. Thereby the at least one test piece may be used without making imprints on the same side as the surface-cast.

According to an embodiment of the moulding device, said first moulding chamber part is arranged to be fixated to the surface in a position so that said inlet is placed at the substantially lowest part of said moulding chamber formed. It should be understood, that the surface to which the first moulding chamber part can have any orientation and that the moulding device has to be adapted to the specific surface. However, the orientation of the surface could be substantially vertical, horizontal, or sloping. Moreover, the surface could be surrounding the moulding device, for example if the moulding device is adapted to making a cast of the inner surface of a tubular member. However, no matter the specific geometry of the surface, the moulding chamber formed by the surface and the first moulding chamber part, will have a lowest part, i.e. a part which form the bottom of the moulding chamber. When the inlet is placed at the substantially lowest part, e.g. at or close to the bottom of the moulding chamber, it is ensured that any moulding material introduced through the inlet into the moulding chamber will fill up the moulding chamber from the bottom and up. If this could not be ensured, the risk exists that the moulding material would drip down into any liquid present in the moulding chamber and mix up with liquid present in the moulding chamber. In this case, the result would be a cast full of small droplets of cured moulding material separated by liquid instead of one coherent cast. When the inlet is placed at the substantially lowest part of the moulding chamber formed, the moulding mass is allowed to enter the moulding chamber as one coherent mass of moulding material which steadily grows and displaces/forces away any fluid present.

Advantageously, the moulding device according to the invention is arranged so that when the first moulding chamber part is fixated to the surface, an outlet for letting out fluid is placed close to the uppermost part of any substantial cavity or indentation formed in the moulding chamber. Hereby, it is ensured, that no fluid will be trapped in any cavity or indentation in the moulding chamber. Instead, the moulding material will fill out the moulding chamber from the bottom thereof and fill out any cavity or indentation in the moulding chamber, whilst forcing away any fluid present therein; this fluid is thus allowed to escape the moulding chamber through the at least one outlet. It should be noted, that the terms "cavity" and "indentation" are meant to describe any. It should be noted, that throughout this description the terms "upper" and "lower" have their ordinary meaning.

According to an advantageous embodiment, the moulding device according the invention moreover comprises means for reducing the volume of the moulding chamber formed. When the volume of the moulding device can be reduced, the moulding chamber can be filled up substantially completely with moulding material, and this moulding material can subsequently be put under increased pressure by said volume reduction. Typically, the area of the first moulding chamber part is magnitudes greater than the cross-sectional area of the at least one outlet; this ensures that the movement of the movable plate results in an increased pressure inside the moulding chamber. Hereby, any small occurrences of fluid within the moulding material can be removed, i.e. forced out by the increased pressure. This results in a considerably enhanced quality of the cast and surface imprint thereof. It should be noted, that the movable plate can have any appropriate shape adapted to the surface and the shape and size of the moulding chamber. Thus, it could be curved, flat or shaped to correspond to a specific geometry.

According to one embodiment, the means for reducing the volume of the moulding chamber comprises a movable plate placed within the moulding chamber and means for moving the movable plate towards the surface. The movable plate should be sized and shaped so that the moving thereof towards the surface corresponds to reducing the volume of the moulding chamber. The means for moving the movable plate towards the surface could e.g. be pressurized liquid or compressed air applied in a position between the movable plate and the first moulding chamber part. Alternatively, the means for moving the movable plate could be mechanical, such as rods pushing the movable plate.

According to another embodiment the means for reducing the volume of the moulding chamber comprises a large, flexible sealing member arranged to be placed between the first moulding chamber part and the surface and means for applying a force to the first moulding chamber part in the direction of the surface after the fixation of the first moulding chamber to the surface. When a force is applied to the first moulding chamber part in the direction of the surface to which the first moulding chamber is fixated, the large, flexible sealing member is compressed, which results in a reduction of the volume of the moulding chamber. Again, this reduction of the volume of the moulding chamber is carried out after the filling of the moulding chamber with moulding material, so that the moulding material is put under pressure to let occurrences of fluid escape.

According to yet another embodiment of the invention, the first moulding chamber part or the movable plate moreover comprises a test piece with surface defects having well-known characteristics. This test piece is placed at the surface of first moulding chamber part or at the movable plate, if this is present in the moulding chamber, so that the surface of the cast resulting from the moulding which has been adjacent to the test piece (i.e. either the first moulding chamber part or the movable plate) comprises an imprint of the test piece. Thus, if the test piece is known to have a characteristic of a predetermined size, such as 1 µm, the presence or absence of an imprint of this characteristic indicates whether the quality of the cast has been adequate to detect flaws/defects of this predetermined size. Thus, a reliable quality control is achieved.

According to yet another embodiment of the invention, the moulding device is adapted to the geometry of a surface comprising a passage, in that the moulding device further comprises a second moulding chamber part adapted to be inserted into the passage. Hereby, the second moulding chamber part is adapted to delimit the moulding chamber created between the surface to be inspected and the moulding device. Hereby, a substantially closed moulding chamber can be obtained even though the surface to be inspected is a surface with a passage. The term "passage" is meant to describe any opening, passageway, nozzle or the like formed in the surface or component to be inspected, the passage being either closed or open at the opposite end compared to the end of the passage into which the second moulding chamber part is inserted. Moreover, it should be noted, that the moulding chamber should not be completely closed, in that outlets will be needed to let any fluid present in the moulding chamber out.

According to an embodiment of the invention, the moulding device moreover comprises an axle connecting the first moulding chamber part to the second moulding chamber part. Thus, the first and second moulding chamber part can be moved as one coherent part. Moreover, the second moulding chamber part adapted to be inserted into the passage in the surface, can be adapted for fixating the moulding device to the surface to be inspected. Hereby, the second moulding chamber part has two functions: to delimit the moulding chamber together with the first moulding chamber part and the surface and to assist in fixating the moulding device to the surface.

According to yet another embodiment, the axle comprises a first channel with two ends, whereof one end is arranged to be an outlet for letting fluid from the moulding chamber into the channel and whereof the other end is arranged to be an outlet for letting out fluid from the channel. Hereby, it is possible to provide an outlet close to the upper part of the indentation formed by the passageway, close to the second moulding chamber part, thereby facilitating the escape of fluid from the indentation.

Advantageously, the second moulding part is an expandable member, and the axle moreover comprises a second channel with two ends, whereof one end is arranged to be an inlet of pressurized fluid and the other end is an outlet into the inside of the expandable member. Hereby, the second moulding part arranged to be inserted into the passage in the surface can have a size and shape adapted to the size and shape of the passage, so that it can easily be inserted therein. After the insertion, pressurized fluid, e.g. pressurized water, can be let into the second channel to make the expandable member expand to seal towards the passage in the surface. Hereby, the second moulding chamber part is fixated inside the passage and seals off the moulding chamber. The expandable member can be any appropriate member, for example an expandable rubber plug.

In another embodiment of the moulding device according to the invention, the first moulding chamber part or the movable plate, if this is present inside the moulding device, moreover comprises a mark arranged for making an imprint on a cast to indicate the orientation of the moulding device with relation to vertical. The mark is placed at the surface of the first moulding chamber part or the movable plate facing the moulding chamber, and the mark could be an indentation on the surface of the first moulding chamber part or of the movable plate. The mark permanently marks a reference position in the cast so that the position of imprints of defects of the surface can be determined unambiguously.

In another embodiment, the moulding device comprises an additional moulding section. Thereby the moulding device may delimit a section of a surface comprising for example a length of a pipe with a reduced diameter e.g. a reducer section of a pipe.

In another embodiment, the additional moulding section comprises:
- a first moulding chamber part adapted to seal off a predetermined part of the surface;
- fixation means for fixating said first moulding chamber part to the surface so that said at first moulding chamber part together with the surface forms a moulding chamber; and
- an inlet allowing the introduction of moulding material into said moulding chamber;
- at least one outlet arranged to let out any fluid present in said moulding chamber from said moulding chamber;
- at least one test piece with surface defects having well-known characteristics for making at least one imprint on said cast of said surface.

Thereby the moulding device may delimit a section of a surface comprising for example a length of a pipe with a reduced diameter e.g. a reducer section of a pipe. Further, the moulding device may inject moulding mass from both moulding devices/sections and/or the moulding device may reduce the volume of the mould using both devices/sections.

The invention moreover relates to a method of making a cast of a surface having features and advantages corresponding to the moulding device.

### BRIEF DESCRIPTION OF THE DRAWINGS

The invention will be explained more fully below in connection with preferred embodiments and with reference to the drawing, in which:
Fig. 1 is a schematic drawing of a moulding device and placing means arranged to place the moulding device adjacent to the surface of a component;
Fig. 2 is a cross-section of the moulding device placed at a vertical wall and with a second moulding chamber part inside a nozzle in the vertical wall;
Fig. 3 is a cross-sectional view through elements of a moulding device adjacent to a sloping wall; and
Figs. 4a to 4g show an example of the process of placing the components of the moulding device adjacent to a vertical wall with a nozzle, where a second moulding chamber part is inserted into a nozzle in a vertical wall of a component, taking a cast of the surface of the component and removing the moulding device.
Fig. 5 shows an example of a moulding device comprising an additional moulding section.

### DESCRIPTION OF PREFERRED EMBODIMENTS

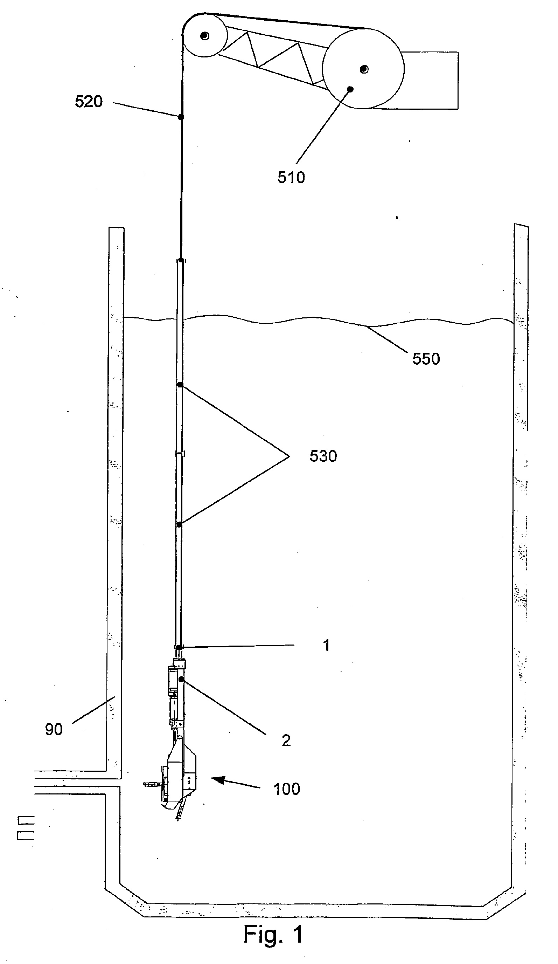

Fig. 1 is a schematic drawing of a moulding device 100 and placing means 510, 520, 530 arranged to place the moulding device 100 adjacent to the surface of a component 90, such as a receptacle.

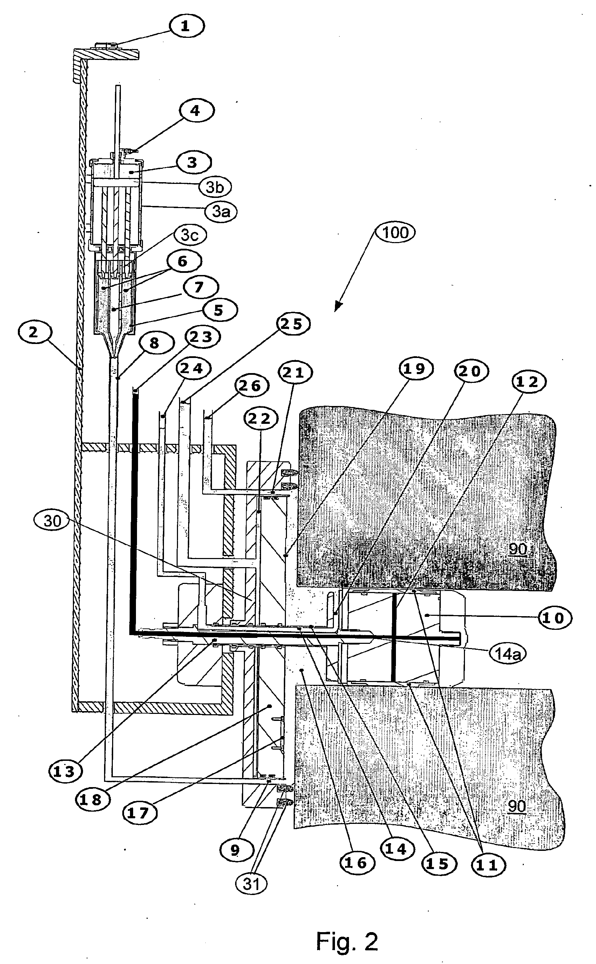

The moulding device 100 comprises a frame body 2 (see also Fig. 2) having a fixture 1 arranged to be fixed to placing means 530. The placing means shown in Fig. 1 comprise one or more rods 530, whereof the lower end (of the lower rod 530) is attached to the fixture 1 of the moulding device 100. The placing means shown in Fig. 1 moreover comprises a wire 520 and a crane 510 arranged to wind out/in the wire 520 to thereby lower/raise the rod(s) 530 and any device 100 fixed thereto. Typically, the placing means 510, 520, 530 are separate from the moulding device, e.g. present on-site.

The placing means 510, 520, 530 should be adapted to be fully remotely controlled and to submerge below a liquid surface 550 to any distance, for example up to 1000 meters.

The placing means 510, 520, 530 are well-known in the art and will therefore not be described in more detail. Other placing means (not shown) could e.g. be a robot, a remotely operated vehicle (ROV), etc. Alternatively, the device could be placed manually at the component 90 to be investigated, e.g. by a diver, if the component is submerged in water.

Fig. 2 is a cross-section of the moulding device 100 placed at a vertical wall of a component 90 and with a second moulding chamber part 10 inside a nozzle in the vertical wall. The component 90 can be any component, element, unit, e.g. the wall of a reactor, a part of an off-shore construction, a ship's hull, etc.

As mentioned above, the moulding device 100 comprises means 1 for fixing the moulding device 100 to the placing means 530 for placing it at the component 90, the surface of which should be inspected by making a cast thereof. The moulding device 100 moreover comprises a frame body 2. The moulding device or the placing means 530 could moreover advantageously comprise a camera (not shown), which can be used during placing and also during the operation of filling the moulding chamber with moulding material.

Attached to the frame body 2 is a moulding mass injection device. The moulding mass injection device comprises a cylinder 3a in which pressurized fluid 3 drives a first piston 3b. The cylinder 3a has an inlet 4 for compressed air or pressurized liquid for the moulding mass injection device. The moulding mass injection device moreover comprises a moulding mass cartridge 5 containing moulding mass in the form of moulding mass filler 6 and moulding mass hardener 7 to be mixed in a static mixer 8, as described below. A second piston 3b connected to a piston rod of the air cylinder 3 presses the moulding mass filler 6 and hardener 7 out of the moulding mass cartridge 5 and through the static mixer 8.

The moulding device moreover comprises a hose or pipe extending from the static mixer 8 to an inlet 9 to a moulding chamber 16 formed between the component 90 and the moulding device 100 as will be explained. The moulding device 100 comprises a first moulding chamber part 30 having appropriate openings functioning as inlets and/or outlets as will be described in the following. The first moulding chamber part 30 is adapted to abut to the surface of the component, typically, but not necessarily, by use of some sealing members 31 placed in the periphery of the first moulding chamber part 30. In the case shown in Fig. 2, the component 90 is a vertical wall with a nozzle and the first moulding chamber part 30 abuts against the vertical wall of the component 90 so that the surface area of the vertical wall around the nozzle is sealed off from the surroundings.

The moulding device 100 moreover comprises a second moulding chamber part 10 to be inserted into the nozzle in the vertical wall of the component 90. The second moulding chamber part 10 has the form of a plug 10 adapted to be inserted into the nozzle, so that the outer dimensions of the plug 10 are slightly smaller than the inner dimensions of the nozzle. For instance, the outer dimensions of the plug 10 could be a few millimetres smaller than the inner dimensions of the nozzle. If the plug 10 is larger than that, it could be difficult or even impossible to insert/remove the plug 10 to/from the nozzle; if the plug 10 is smaller than that, it might not be able to serve its function, i.e. to secure the moulding device in the nozzle and to seal off the moulding chamber from the remaining portion of the nozzle (i.e. the portion of the nozzle to the right of the plug 10 in Fig. 2). The allowable tolerance of the plug size is about a millimetre. The plug 10 comprises an outer sheath or cylinder 11 of expandable material, such as expandable rubber.

The plug 10 is attached to a hollow axle 13 that is connected to and extends through the first moulding chamber part 30. Inside the hollow axle 13 is a channel 14a for pressurized liquid, e.g. pressurized water or pressurized oil. This pressurized liquid can be let into the channel 14a via an inlet 23 and into channels 12 inside of the plug 10 to expand the cylinder 11 of expandable material, so that the plug 10 seals against the inside of the nozzle in the component 90. Hereby, the plug 10 serves to fix the moulding device to the component 90 as well as to sealing of the moulding chamber 16 from the surroundings.

The axle 13 between the plug 10 and the first moulding chamber part 30 moreover comprises draining channel having an outlet 20 for letting out liquid and/or excess moulding mass from the moulding chamber during the filling thereof with moulding material. For this reason, the outlet 20 is arranged in close proximity to the upper, rightmost arc/corner/surface of the moulding chamber close to the plug 10. Another draining channel has an opening or outlet 21 close to the uppermost part of the whole moulding chamber and an outlet 26 for letting out liquid and/or moulding material from the draining channel to the surroundings. This presence and position of the outlets 20, 21 render the emptying of liquid present in.the moulding chamber during the filling thereof with moulding material possible. The draining channel in the axle 13 extends through the axle 13 to an outlet 24 of liquid and/or moulding material. It should be noted, that the channel 14a for pressurized liquid is isolated from the draining channel for letting out liquid and/or excess moulding mass from the moulding chamber. This draining channel in Fig. 2 is placed in a recess or groove 14 in the axle 13, and a pipe or sheath 15 surrounds and seals the axle 13 containing the draining channel in the groove 14.

Furthermore, the moulding device 100 comprises a movable plate 18. The movable plate 18 is placed between the first moulding chamber part 30 and the component 90 when the moulding device is fixed to the component 90. The area of the movable plate 18 is substantially equal to the inside area of the first moulding chamber part 30, i.e. the area of the first moulding chamber part 30 facing the moulding chamber 16. The axle 13 and the draining channels extend through the movable plate 18; apart from this the movable plate 18 is sized and shaped so at to abut to the first moulding chamber part 30 and seal of the first moulding chamber part 30 from the moulding chamber 16 so that no moulding material or liquid can flow from the moulding chamber part 16 to a volume 22 between the movable plate 18 and the first moulding chamber part 30. The moulding device 100 moreover comprises a channel leading from an inlet 25 to the volume 22 between the movable plate 18 and the first moulding chamber part 30. This channel is arranged to lead compressed air or pressurized liquid from the inlet 25 to the volume 22 to move the movable plate 18 towards the component (i.e. to the right in Fig. 2). Hereby, the volume of the moulding chamber 16 is reduced. This is useful in putting pressure on moulding material present in the moulding chamber 16, typically just after the filling of the moulding chamber 16 with the moulding material and prior to the curing thereof. Thus, the reduction of the moulding chamber volume enhances the quality of the cast, in that any small presences of liquid in the moulding material, which have not been drained through the draining channels, will be pressed out of the moulding material and into the draining channels.

The movable plate 18 moreover comprises a test piece 17 with surface defects having well-known characteristics. This test piece is placed at the surface of the movable plate 18, so that the surface of the cast which has been adjacent to the test piece 17 (i.e. to the movable plate) comprises an imprint of the test piece. Thus, if the test piece 17 is known to have a characteristic of a predetermined size, such a 1 µm, the presence or absence of an imprint of this characteristic indicates whether the quality of the cast has been adequate to detect flaws/defects of this predetermined size. Thus, a reliable quality control is achieved.

The movable plate 18 moreover comprises a mark 19 arranged for making an imprint on a cast to indicate the orientation of the moulding device 100 with relation to vertical. This mark 19 is placed on the surface of the volume-reducing plate facing the moulding chamber, and is used to making a permanent indication in the cast of a reference position, such as "straight upwards".

In the above, the movable plate 18 has been described as a means for reducing the volume of the moulding chamber 16. However, alternatives for reducing the volume exist, such as when the moulding device comprises a large, flexible sealing member, as the sealing members 31, arranged to be placed between the first moulding chamber part 30 and the surface. The means for reducing the volume of the moulding chamber 16 could in this case also comprise means for applying a force to the first moulding chamber part in the direction of the surface after the fixation of the first moulding chamber to the surface; the application of this force would compress the large, flexible sealing member so that the first moulding chamber part 30 approaches the surface, which will reduce the volume of the moulding chamber 16. If this or other alternatives to the movable plate for reducing the volume of the moulding chamber 16 is employed, the movable plate 18 can be dispensed with. In this case, the test piece 17 and/or the mark 19 will be placed on the inside of the first moulding chamber part 30, i.e. facing the moulding chamber 16, instead of on the inside of the movable plate 18.

In the following the process of operating the moulding device is described. In general, the process consists of placing the moulding device adjacent the surface of the component to be investigated; fixing the moulding device securely to the component; filling the created moulding chamber with moulding material, where this filling results in a simultaneous draining of liquid from the moulding chamber; increasing the pressure inside the moulding chamber; letting the moulding material cure/harden into a cast; removing the moulding device from the component; removing the cast from the moulding device for subsequent investigation or analysis.

Firstly, the moulding device is to be placed adjacent to the surface to be investigated by means of the placing means 510, 520, 530 (see Fig. 1). As mentioned above, the placing means 510, 520, 530 typically are separate from the moulding device, e.g. present on-site. The first and second moulding chamber parts 30, 10 and the pieces connected thereto are subsequently lowered into a position below the liquid surface. In the example shown in Fig. 2, where the component to be investigated is a vertical wall with a nozzle, the second moulding chamber part, i.e. the plug 10, is inserted into the nozzle. Pressurized liquid is applied through the inlet 23 from where it flows through the hollow axle 13 and into the plug 10 via the channels 12 to expand the rubber cylinder 11. The expanded plug 10 holds the tool in place and seals off the nozzle, so that the moulding mass can not flow further into the nozzle. It should be noted, that the placing of the moulding device adjacent to the surface results in the establishment of a moulding chamber between the moulding device and the surface, wherein that elements of the moulding device form part of the moulding chamber and the surface forms other parts of the moulding chamber. Since the moulding chamber is below a liquid surface, it will initially be filled with the liquid; this liquid will be removed from the moulding chamber during the operation of the moulding device, as it will be explained in the following.

Once the moulding device is placed and fixed in position, i.e. the second moulding chamber 10 is placed in the nozzle and expanded, the moulding masse injector device is activated: Pressurized liquid or compressed air is let through the inlet 4 and into the inside 3 of the cylinder 3a. The first piston 3b inside the cylinder 3a is moved downwards by the pressurized liquid or compressed air and thereby presses the moulding mass filler 6 and moulding mass hardener 7 out of the moulding mass cartridge 5 and through the static mixer 8. The mixed two-component moulding mass then enters the moulding chamber 16 through a hose, tube or pipe and through the inlet 9 to the moulding chamber 16. As the moulding mass inlet 9 is placed in the lowest part of the moulding chamber 16, the moulding mass entering the moulding chamber 16 displaces the liquid; this liquid escapes the moulding chamber through the outlets 20 and 21. The density of the moulding mass is higher than the density of the liquid and the moulding mass introduced through the inlet 9 will fill up the moulding chamber 16 from the bottom and up. Thus, the moulding mass is allowed to enter the moulding chamber 16 as one coherent mass of moulding material which steadily grows and displaces/forces away any liquid present. The liquid and excess moulding material escape via the outlets 20 and 21. When excess moulding mass becomes visible in the outlet 21, the moulding mass has filled up the moulding chamber 16.

Subsequently, the volume of the moulding chamber 16 is reduced to create an increased pressure inside the moulding chamber 16. This increased pressure results in a further flow of moulding material into the outlets 20, 21 and of any remaining presences of liquid, e.g. small pockets of liquid dispersed inside the moulding material.

As described above, the volume of the moulding chamber 16 is reduced by applying compressed air or pressurized liquid in through the inlet 25 and into the volume 22 between the movable plate 18 and the first moulding chamber part 30. This causes the movable plate 18 to move towards the plug 10, thereby reducing the volume of the moulding chamber 16. Since the moulding mass is practically incompressible, some of the moulding mass in the moulding chamber 16 will be forced to escape through the outlets 20 and 21. This creates a flow under a higher pressure than during the filling of the moulding chamber 16. The increased pressure combined with the flows facilitate the removal of small liquid pockets in the moulding mass, which results in an very good contact between the moulding material and the surface.

When moulding mass becomes visible in the outlet 24, the inlet 25 is blocked and the pressure in the volume 22 is maintained during the curing time for the moulding material. When the curing time has passed, the air pressure in the volume 22 and the liquid pressure in the channels 12 of the plug 10 are released. The moulding device can subsequently be removed from the nozzle and the surface and can be pulled up to the surface. Thereafter, the plug 10 can then be released from the axle 13 and the cast in the moulding chamber 16 can be removed from the moulding device for subsequent investigation, e.g. microscopic examination.

As noted above, the moulding device 100 operates by sealing off a limited part of the surface of the component 90 to be inspected and thus use the component as well as elements of the moulding device 100 as parts of the moulding chamber 16. However, the sealing between the moulding device 100 and the component is not completely tight, since liquid and excess moulding material in the moulding chamber 16 are allowed to escape through the outlets 20, 21. This escape of liquid and excess moulding material through the outlets 20, 21 must be carefully controlled to provide the correct flow and filling in the moulding chamber 16. The cross section area of the outlets 20, 21 must be carefully dimensioned to ensure the necessary flow in all parts of the moulding chamber 16. The flow can be increased in one part of the moulding chamber 16 by increasing the cross-sectional area of the outlet nearest to the section concerned. Likewise, the flow in another section of the moulding chamber 16 can be decreased by reducing the cross-sectional area of the outlet closest to that section of the moulding chamber 16. Thus, the flow distribution can be controlled by dimensioning the cross-sectional areas of the outlets 20, 21 relative to each other.

Furthermore, the outlets 20, 21 and the air pressure supplied to the volume 22 to reduce the volume of the moulding chamber 16 must be adjusted to each other. If the pressure supplied to the volume 22 is too low, the flow and pressure of the moulding mass will be insufficient to remove remaining liquid pockets and in extreme cases, the moulding mass will cure before all liquid pockets are removed and a satisfactory surface contact between the moulding mass and the surface is achieved.

If the pressure used for volume-reduction of the moulding chamber is too high, the flow will not be a controlled flow, which might result in leakage from the seals 31, causing spillage of moulding material. In extreme cases, the tool may suffer severe damage.

It should be noted, that even though the above description of Fig. 2 is related to a surface submerged in liquid, the moulding device functions equivalently when used to surfaces that are not submerged in liquid. In the latter case, the moulding chamber will contain air or gas when the moulding chamber is placed on a surface, and the draining of this air or gas is equivalent to the draining of the liquid.

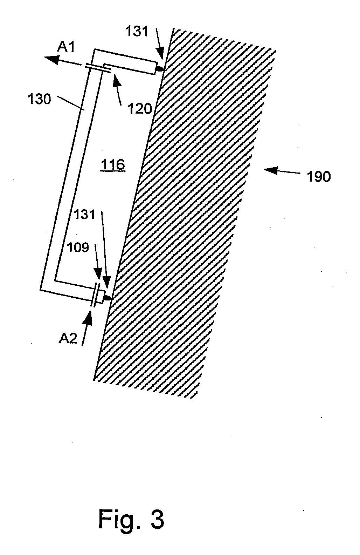

Fig. 3 is a cross-sectional view through elements of a moulding device adjacent to a sloping wall of a component 190. The moulding device is simplified compared to the moulding device 100 shown in Fig. 2 in that the component has no nozzle and the moulding device therefore has no second moulding chamber part.

Shown is a first moulding chamber part 130 placed adjacent to the surface of the component 190 by the intermediate of a sealing member 131. The sealing member 131 is placed adjacent to the periphery of the first moulding chamber part 130. The first moulding chamber part 130 moreover comprises an inlet 109 for introduction of moulding material into the moulding chamber 116 which is formed by the enclosure between the first moulding chamber part 130 and the surface of the component 190. It should be noted, that the position of the inlet 109 of first moulding chamber part 130 has been adapted to the direction of the sloping of the surface, in that the inlet 109 is placed in the substantially lowermost part of the moulding chamber 116. Thus, moulding material introduced through the inlet in the direction of the arrow A2 will be able to fill up the moulding chamber 116 from the bottom thereof as a coherent mass of moulding material.

The first moulding chamber part 130 moreover comprises an outlet 120 for escape of fluid and/or excess moulding material from the moulding chamber 116. Again, the position of the outlet 120 has been adapted to the direction of the sloping of the surface, in that the outlet 120 is placed in the substantially uppermost part of the moulding chamber 116. Thus, fluid present in the moulding chamber 116 will be able to escape from even he uppermost part of the moulding chamber 116 there in the direction of the arrow A1 as the moulding chamber 116 is filled up.

The moulding device shown in Fig. 3 comprises additional elements, such as movable plate, test piece, mark, frame body, moulding mass injection device, etc., as described in connection with Fig. 2. However, these additional elements are not shown in Fig. 3 and will not be described further.

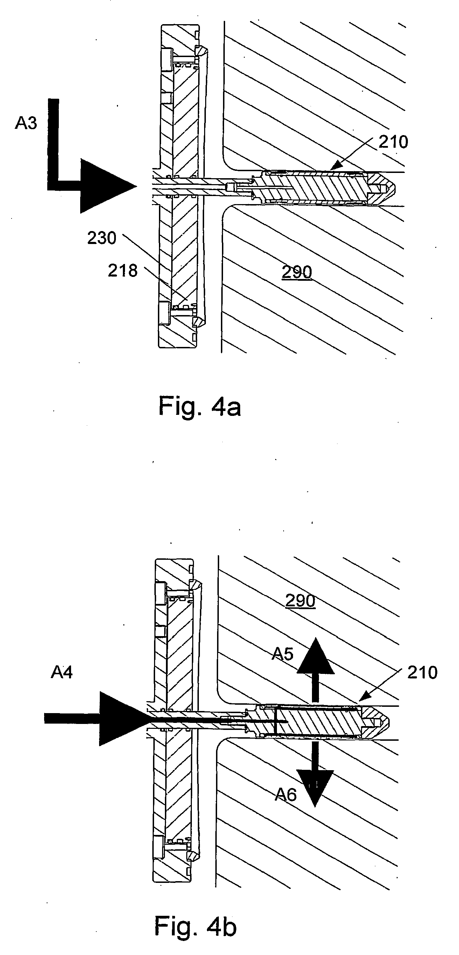

Figs. 4a to 4g show an example of the process of placing the components of the moulding device adjacent to a vertical wall with a nozzle, where a second moulding chamber part 210 is inserted into a nozzle in a vertical wall of a component 290, taking a cast of the surface and removing the moulding device.

Fig. 4a shows the insertion of the second moulding chamber part 210 into the nozzle in the component 290. Shown is also a first moulding chamber part 230 and a movable plate 218. The arrow A3 indicates the direction of the movement of the first and second moulding chamber parts 210, 230 and the movable plate.

Fig. 4b shows the application of liquid pressure (in the direction of the arrow A4) to the channels 12 (see Fig. 2) inside the second moulding chamber part 210, which is thereby expanded and fixed inside the nozzle. The expansion of the second moulding chamber part 210 is indicated by means of the arrows A5 and A6

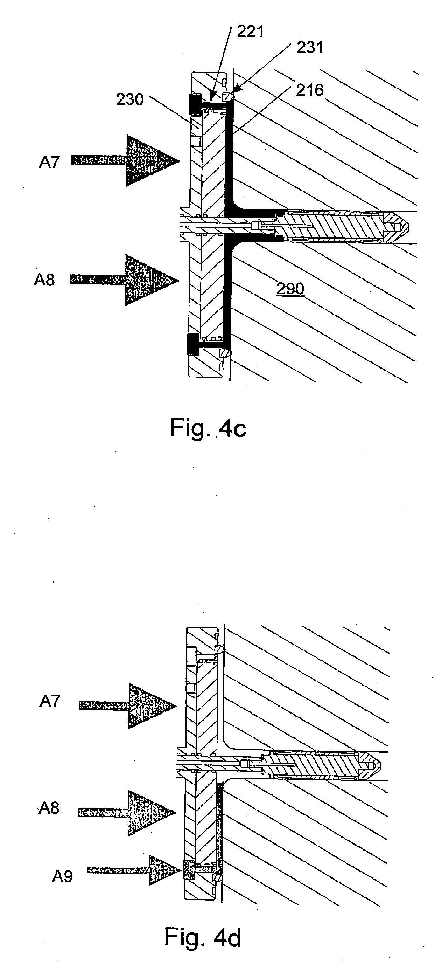

The arrows A7 and A8 in Fig. 4c indicate the application of pressure to the first moulding chamber part 230, whereby the first moulding chamber part 230 is brought into contact with and seals of the surface of the component 290. If the surface of the component 290 is submerged in a liquid, the mould chamber 216 will be filled with the liquid.

The arrow A9 in Fig. 4d indicates the introduction of moulding mass into the moulding chamber. This can be carried out by means of an air driven moulding mass injector (not shown). The moulding chamber is filled from the bottom and up. When moulding mass becomes visible in the top of the first moulding chamber part, which could be transparent, or exits through an outlet 221 in the top of the first moulding chamber part, the chamber is full. The arrows A7 and A8 in Fig. 4d indicate the application of pressure to the first moulding chamber part 230, as in Fig. 4c.

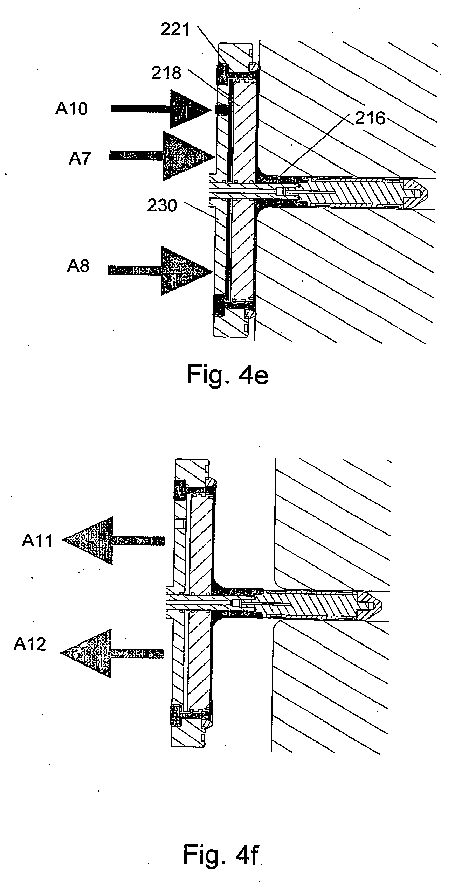

After the filling of the moulding chamber with moulding mass, see Fig. 4e, pressurized air is applied to the volume between the first moulding chamber part 230 and the movable plate 218, in the direction of the arrow A10.

Hereby, the movable plate 218 moves in a direction parallel to the arrow A10 and compresses the moulding mass in the moulding chamber; the moulding mass thus fills out all vacant space. Excess moulding mass leaves the mould through the outlet 221 at the top of the first moulding chamber part 230. The moulding material is then left for hardening. The arrows A7 and A8 in Fig. 4d indicate the application of pressure to the first moulding chamber part 230, as in Figs. 4c and 4d.

When the moulding mass has hardened, the mould is retracted by retraction means (not shown) in the direction of the arrows A11 and A12, see Fig. 4f. As soon as the first and second moulding chamber parts loose contact with the surface of the component, the surrounding fluid pressure will help loosening the cast and the moulding device from the surface of the component.

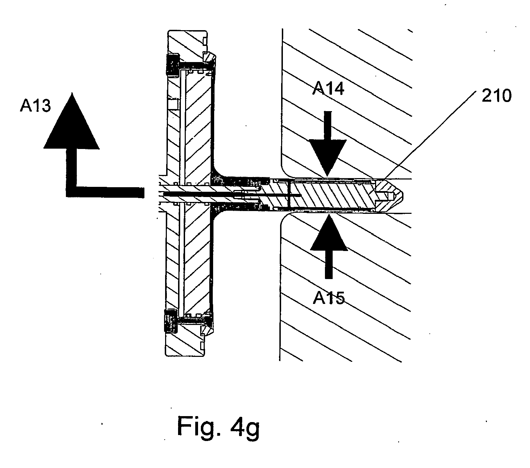

In Fig. 4g the arrows A14 and A15 indicate that the liquid pressure in the second moulding chamber part 210 is released. Subsequently the device is retracted from the nozzle and elevated from the surface of the component, as indicated by the arrow A13. Thereafter, the second moulding chamber part 210 can be released, e.g. unscrewed, from the rest of the moulding device and the cast can be released from the moulding device for examination.

It should be noted, that the moulding material used could be any suitable material, such as for example CopyRite^{®}. The density of the moulding material should be, and typically automatically will be, greater than the density of the fluid present around the component to be investigated, so that the fluid forced away by the moulding material introduced into the moulding chamber will flow upwards and out through the at least one outlet. However, it is conceivable, that the density of the fluid would be greater than that of the moulding material. In this case, the inlet should be in the upper part of the moulding chamber and at any substantial indentation an outlet should be present in the lower part thereof.

The term "cast" is meant to denote the substance obtained as the result of the cured or hardened moulding material.

As noted above, the moulding device is arranged to be used to investigate the surface of a component which is difficult to access. This could be due to geometry, to radioactivity, to the component being submerged in liquid, etc. The use of the moulding device to reactors is especially advantageous; however, the use of the moulding device is of course not limited to this use, in that it can be used for any appropriate surface any place, e.g. at off-shore constructions, inside refineries, etc.

The placing means 510, 520, 530 (see Fig. 1) described could comprise ASEA rods, flexible wire or rods. When rods are used, the orientation of the moulding chamber is fixed with relation to vertical. As mentioned above, the placing means could alternatively be robots or ROVs.

The geometry of the first moulding chamber part can be any appropriate geometry, such as a rectangular or circular plate. The movable plate inside of the first moulding chamber should of cause have a similar geometry.

Alternatively or additionally the moulding device (and corresponding method) may be applied on both horizontal and vertical surfaces and combinations thereof. For example, the fixation of the moulding device in a cavity is not needed if an opposing surface can be utilized to support the moulding device upon. For instance in a medium diameter pipe (larger than approximately 200mm in diameter) a section of the pipe wall may be sealed of with the moulding device, while the device is supported on the opposing inside of the pipe wall and an impression of the sealed surface may be made. Furthermore, the seal may be utilized to reduce the volume of the mould. By supporting the moulding device it-self using rubber bushes, the moulding device may adapt to the surface with more evenly distributed pressure on the sealing gaskets. Alternatively or additionally the moulding device (and corresponding method) may be used on any type of surface.

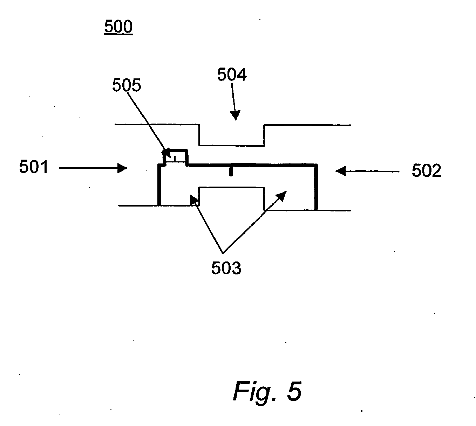

Figure 5 is a schematic drawing of a moulding device (500) split up into two sections (501 and 502). The present embodiment of the moulding device (and corresponding method) may be applied to a non-planar surface. For example a section of an inner surface of a pipe comprising a length with a reduced diameter (504). A cast may be obtained by using a moulding device comprising two sections, each section may be substantially identical to the moulding device (100) in Figure 2. One section (501) may be applied on the left side of the length with a reduced diameter and the other section (502) on the right side of the length with a reduced diameter. Once the parts of the moulding device are placed on each side of the length of reduced diameter, they are moved towards each other until they are substantially in physical contact with each other. Thereby the two sections and the surface of the pipe comprising a length of reduced diameter define a volume (503) which may be sealed. Thereby the moulding device may create a sealed volume (503) across the length of reduced diameter (504). Moulding mass may then be injected from one and/or the other of the moulding device sections. Further, a piston (505) in one of the moulding device sections may reduce the volume of the moulding chamber. Alternatively or additionally a piston in the other section may reduce the volume. Thereby the pressure in the entire moulding chamber is increased ensuring that substantially all voids are filled with moulding mass and a high quality cast of the surface comprising a length with reduced diameter may be made.

In general any of the technical features described above may be combined into one embodiment. Alternatively or additionally any of the technical features described above may be in separate embodiments. Alternatively or additionally any of the technical features described above may be combined with any number of other technical features described above to yield any number of embodiments. For example, one embodiment may have the technical feature of a test piece and the technical feature of reducing the volume of the moulding volume.

## Claims

1. A moulding device (100) for making a cast of a surface, the moulding device (100) comprising:
• a first moulding chamber part (30) adapted to seal off a predetermined part of the surface;
• fixation means for fixating said first moulding chamber part (30) to the surface so that said at first moulding chamber part (30) together with the surface forms a moulding chamber (16); and
• an inlet (9) allowing the introduction of moulding material into said moulding chamber (16);
• at least one outlet (20, 21) arranged to let out any fluid present in said moulding chamber (16) from said moulding chamber (16);
**characterized in that** the moulding device (100) further comprises:
• at least one test piece (17) with surface defects having well-known characteristics for making at least one imprint on said cast of said surface.

2. A moulding device according to claim 1, wherein said at least one test piece (17) with surface defects having well-known characteristics is placed such that it will leave an imprint on a side of the cast facing away from said surface.

3. A moulding device according to any of the claims 1 to 2, wherein the first moulding chamber part (30) moreover comprises said at least one test piece (17) with surface defects having well-known characteristics.

4. A moulding device according to any of the claims 1 to 3, wherein said first moulding chamber part (30) is arranged to be fixated to the surface in a position so that said inlet (9) is placed at the substantially lowest part of said moulding chamber (16) formed.

5. A moulding device according to any of the claims 1 to 4, wherein said first moulding chamber part (30) is arranged so that when it is fixated to the surface, an outlet (20, 21) for letting out fluid is placed close to the uppermost part of any substantial cavity or indentation formed in the moulding chamber (16).

6. A moulding device according to any of the claims 1 to 5, wherein the moulding device (100) moreover comprises means (18) for reducing the volume of the molding chamber formed.

7. A moulding device according to claim 6, wherein the means (18) for reducing the volume of the moulding chamber comprises a movable plate (18) within the moulding chamber and means for moving the movable plate (18) towards the surface.

8. A moulding device according to claim 7, wherein the movable plate (18) moreover comprises said at least one test piece (17) with surface defects having well-known characteristics.

9. A moulding device according to claim 6, wherein the means for reducing the volume of the moulding chamber comprises a large, flexible sealing member arranged to be placed between the first moulding chamber part and the surface and means for applying a force to the first moulding chamber part in the direction of the surface after the fixation of the first moulding chamber to the surface.

10. A moulding device according to any of the claims 1 to 9, wherein the moulding device (100) is adapted to the geometry of a surface comprising a passage, in that the moulding device (100) further comprises a second moulding chamber part (10) adapted to be inserted into the passage.

11. A moulding device (100) according to claim 10, wherein the moulding device (100) moreover comprises an axle (13) connecting the first moulding chamber part (30) to the second moulding chamber part (10).

12. A moulding device (100) according to claim 11, wherein the axle (13) comprises a first channel (14) with two ends, whereof one end is arranged to be an outlet (20) for letting fluid from the moulding chamber (16) into the channel (14) and whereof the other end is arranged to be an outlet (24) for letting out fluid from the channel (14).

13. A moulding device (100) according to claim 11 or 12, wherein the second moulding part (10) is an expandable member, and wherein the axle (13) moreover comprises a second channel (14a) with two ends, whereof one end is arranged to be an inlet (23) of pressurized fluid and the other end is an outlet into the inside of the expandable member.

14. A moulding device (100) according to any of the claims 1 to 13, wherein the first moulding chamber part (30) moreover comprises a mark (19) arranged for making an imprint on a cast to indicate the orientation of the moulding device (100) with relation to a known orientation.

15. A moulding device (100) according to any of the claims 1 to 13, wherein the movable plate (18) moreover comprises a mark (19) arranged for making an imprint on a cast to indicate the orientation of the moulding device (100) with relation to a known orientation.

16. A moulding device (100) according to any of the claims 1 to 15, wherein the moulding device comprises an additional moulding section (502).

17. A moulding device (100) according to claim 16, wherein the additional moulding section (502) comprises:
• a first moulding chamber part (30) adapted to seal off a predetermined part of the surface;
• fixation means for fixating said first moulding chamber part (30) to the surface so that said at first moulding chamber part (30) together with the surface forms a moulding chamber (16); and
• an inlet (9) allowing the introduction of moulding material into said moulding chamber (16);
• at least one outlet (20, 21) arranged to let out any fluid present in said moulding chamber (16) from said moulding chamber (16);
• at least one test piece (17) with surface defects having well-known characteristics for making at least one imprint on said cast of said surface.

18. A method of making a cast of at least part of a surface by means of a moulding device (100) comprising the steps of:
• placing a first moulding chamber part (30) to a surface, where the first moulding chamber part (30) is adapted to seal off a predetermined part of the surface;
• fixing said first moulding chamber part (30) to the surface so that said at first moulding chamber part (30) together with the surface forms a moulding chamber (16); and
• introducing moulding material through an inlet (9) into said moulding chamber (16);
• letting out any fluid present from said moulding chamber (16) through at least one outlet (20, 21) arranged to let out any fluid present in said moulding chamber (16);
**characterized in that** the method further comprises the step of:
• marking said cast with at least one test piece (17) with surface defects having well-known characteristics for making at least one imprint on said cast of said surface.

19. A method according to claim 18, wherein the first moulding chamber part (30) moreover comprises said at least one test piece (17) with surface defects having well-known characteristics, said well-known characteristics being imprinted on a side of the cast facing away from said surface.

20. A method according to claim 18 or 19, wherein said first moulding chamber part (30) is fixated to the surface in a position so that said inlet (9) is placed at the substantially lowest part of said moulding chamber (16) formed.

21. A method according to any of the claims 18 to 20, wherein said first moulding chamber part (30) is fixated to the surface, so that an outlet (20, 21) for letting out fluid is placed close to the uppermost part of any substantial cavity or indentation formed in the moulding chamber (16).

22. A method according to any of the claims 18 to 21, further comprising the step of reducing the volume of the moulding chamber (16) formed, where the step of reducing the volume of the moulding chamber (16) is carried out after introducing moulding material into said moulding chamber (16).

23. A method according to claim 22, wherein the step of reducing the volume of the moulding chamber (16) comprises moving a movable plate (18) within the moulding chamber towards the surface.

24. A method according to claim 22, wherein the step of reducing the volume of the moulding chamber (16) comprises applying a force to the first moulding chamber part in the direction of the surface.

25. A method according to any of the claims 18 to 24, further comprising the step of inserting a second moulding chamber part (10) adapted to be inserted into the passage in a surface prior to the step of fixing the first moulding chamber part (30) to the surface.

26. A method according to any of the claims 18 to 25, further comprising an additional moulding section (502).

27. A method according to claim 26 wherein the additional moulding section (502) comprises:
• a first moulding chamber part (30) adapted to seal off a predetermined part of the surface;
• fixation means for fixating said first moulding chamber part (30) to the surface so that said at first moulding chamber part (30) together with the surface forms a moulding chamber (16); and
• an inlet (9) allowing the introduction of moulding material into said moulding chamber (16);
• at least one outlet (20, 21) arranged to let out any fluid present in said moulding chamber (16) from said moulding chamber (16);
at least one test piece (17) with surface defects having well-known characteristics for making at least one imprint on said cast of said surface.

## Patentansprüche

1. Formungseinrichtung (100) zur Herstellung eines Abgusses einer Oberfläche, welche Formungseinrichtung (100) umfasst:
• einen ersten Formungskammerteil (30), der für eine Abriegelung eines vorbestimmten Teils der Oberfläche angepasst ist;
• Fixiermittel zum Fixieren des ersten Formungskammerteils (30) auf der Oberfläche, so dass der erste Formungskammerteil (30) zusammen mit der Oberfläche eine Formungskammer (16) bildet; und
• einen die Einführung von Formungsmaterial in die Formungskammer (16) erlaubenden Einlass (9);
• zumindest einen Auslass (20, 21), welcher dafür ausgelegt ist, um jedes in der Formungskammer (16) vorhandene Fluid aus der Formungskammer (16) herauszulassen;
**dadurch gekennzeichnet, dass** die Formungseinrichtung (100) zusätzlich umfasst:
• zumindest ein Probestück (17) mit Oberflächendefekten, aufweisend wohlbekannte Merkmale zur Herstellung zumindest eines Abdrucks auf dem Abguss der Oberfläche.

2. Formungseinrichtung nach Anspruch 1, wobei das zumindest eine Probestück (17) mit Oberflächendefekten, aufweisend wohlbekannte Merkmale, in einer solchen Weise platziert ist, dass es einen Abdruck auf einer der Oberfläche abgewandten Seite des Abgusses hinterlassen wird.

3. Formungseinrichtung nach irgendeinem der Ansprüche 1 bis 2, wobei der erste Formungskammerteil (30) außerdem das zumindest eine Probestück (17) mit Oberflächendefekten, aufweisend wohlbekannte Merkmale, umfasst.

4. Formungseinrichtung nach irgendeinem der Ansprüche 1 bis 3, wobei der erste Formungskammerteil (30) dafür ausgelegt ist, um auf der Oberfläche in einer Position fixiert zu werden, so dass der Einlass (9) am im Wesentlichen untersten Teil der gebildeten Formungskammer (16) platziert ist.

5. Formungseinrichtung nach irgendeinem der Ansprüche 1 bis 4, wobei der erste Formungskammerteil (30) so ausgelegt ist, dass beim dessen Fixieren auf der Oberfläche ein Auslass (20, 21) zum Herauslassen von Fluid in der Nähe vom obersten Teil von jedem wesentlichen Hohlraum oder Einschnitt, gebildet in der Formungskammer (16), platziert ist.

6. Formungseinrichtung nach irgendeinem der Ansprüche 1 bis 5, wobei die Formungseinrichtung (100) außerdem ein Mittel (18) zum Reduzieren des Volumens der gebildeten Formungskammer umfasst.

7. Formungseinrichtung nach Anspruch 6, wobei das Mittel (18) zum Reduzieren des Volumens der Formungskammer eine bewegliche Platte (18) innerhalb der Formungskammer und Mittel zum Bewegen der beweglichen Platte (18) zur Oberfläche hin umfasst.

8. Formungseinrichtung nach Anspruch 7, wobei die bewegliche Platte (18) außerdem das zumindest eine Probestück (17) mit Oberflächendefekten, aufweisend wohlbekannte Merkmale, umfasst.

9. Formungseinrichtung nach Anspruch 6, wobei das Mittel zum Reduzieren des Volumens der Formungskammer ein großes, flexibles Versiegelungselement, das dafür ausgelegt ist, um zwischen dem ersten Formungskammerteil und der Oberfläche platziert zu werden, und Mittel zur Ausübung einer Kraft auf den ersten Formungskammerteil in der Richtung der Oberfläche nach dem Fixieren der ersten Formungskammer auf der Oberfläche umfasst.

10. Formungseinrichtung nach irgendeinem der Ansprüche 1 bis 9, wobei die Formungseinrichtung (100) für die Geometrie einer Oberfläche angepasst ist, umfassend einen Durchgang, indem die Formungseinrichtung (100) zusätzlich einen zweiten Formungskammerteil (10) umfasst, der für ein Einsetzen in den Durchgang angepasst ist.

11. Formungseinrichtung (100) nach Anspruch 10, wobei die Formungseinrichtung (100) außerdem eine den ersten Formungskammerteil (30) mit dem zweiten Formungskammerteil (10) verbindende Welle (13) umfasst.

12. Formungseinrichtung (100) nach Anspruch 11, wobei die Welle (13) einen ersten Kanal (14) mit zwei Enden umfasst, von denen das eine Ende dafür ausgelegt ist, als ein Auslass (20) zum Einführen von Fluid aus der Formungskammer (16) in den Kanal (14) zu dienen, und von denen das andere Ende dafür ausgelegt ist, als ein Auslass (24) zum Herauslassen von Fluid aus dem Kanal (14) zu dienen.

13. Formungseinrichtung (100) nach Anspruch 11 oder 12, wobei der zweite Formungsteil (10) ein expandierbares Element ist, und wobei die Welle (13) außerdem einen zweiten Kanal (14a) mit zwei Enden umfasst, von denen das eine Ende dafür ausgelegt ist, als ein Einlass (23) von Druckfluid zu dienen, und das andere Ende ein Auslass in das Innere des expandierbaren Elements ist.

14. Formungseinrichtung (100) nach irgendeinem der Ansprüche 1 bis 13, wobei der erste Formungskammerteil (30) außerdem eine Markierung (19) umfasst, welche für eine Herstellung eines Abdrucks auf einem Abguss zum Anzeigen der Orientierung der Formungseinrichtung (100) im Verhältnis zu einer bekannten Orientierung vorgesehen ist.

15. Formungseinrichtung (100) nach irgendeinem der Ansprüche 1 bis 13, wobei die bewegliche Platte (18) außerdem eine Markierung (19) umfasst, welche für eine Herstellung eines Abdrucks auf einem Abguss zum Anzeigen der Orientierung der Formungseinrichtung (100) im Verhältnis zu einer bekannten Orientierung vorgesehen ist.

16. Formungseinrichtung (100) nach irgendeinem der Ansprüche 1 bis 15, wobei die Formungseinrichtung einen zusätzlichen Formungsabschnitt (502) umfasst.

17. Formungseinrichtung (100) nach Anspruch 16, wobei der zusätzliche Formungsabschnitt (502) umfasst:
• einen ersten Formungskammerteil (30), der für eine Abriegelung eines vorbestimmten Teils der Oberfläche angepasst ist;
• Fixiermittel zum Fixieren des ersten Formungskammerteils (30) auf der Oberfläche, so dass der erste Formungskammerteil (30) zusammen mit der Oberfläche eine Formungskammer (16) bildet; und
• einen die Einführung von Formungsmaterial in die Formungskammer (16) erlaubenden Einlass (9);
• zumindest einen Auslass (20, 21), welcher dafür ausgelegt ist, um jedes in der Formungskammer (16) vorhandene Fluid aus der Formungskammer (16) herauszulassen;
• zumindest ein Probestück (17) mit Oberflächendefekten, aufweisend wohlbekannte Merkmale zur Herstellung zumindest eines Abdrucks auf dem Abguss der Oberfläche.

18. Verfahren zur Herstellung eines Abgusses von zumindest einem Teil einer Oberfläche mittels einer Formungseinrichtung (100), umfassend die Schritte:
• des Platzierens eines ersten Formungskammerteils (30) auf einer Oberfläche, wobei der erste Formungskammerteil (30) für eine Abriegelung eines vorbestimmten Teils der Oberfläche angepasst wird;
• des Fixierens des ersten Formungskammerteils (30) auf der Oberfläche, so dass der erste Formungskammerteil (30) zusammen mit der Oberfläche eine Formungskammer (16) bildet; und
• der Einführung von Formungsmaterial durch einen Einlass (9) in die Formungskammer (16);
• des Herauslassens jedes vorhandenen Fluids aus der Formungskammer (16) durch zumindest einen Auslass (20, 21), welcher dafür ausgelegt wird, um jedes in der Formungskammer (16) vorhandene Fluid herauszulassen;
**dadurch gekennzeichnet, dass** das Verfahren zusätzlich den Schritt des:
• Markierens des Abgusses mit zumindest einem Probestück (17) mit Oberflächendefekten, aufweisend wohlbekannte Merkmale zur Herstellung mindestens eines Abdrucks auf dem Abguss der Oberfläche.

19. Verfahren nach Anspruch 18, wobei der erste Formungskammerteil (30) außerdem das zumindest eine Probestück (17) mit Oberflächendefekten umfasst, aufweisend wohlbekannte Merkmale, wobei die wohlbekannten Merkmale auf eine der Oberfläche abgewandte Seite des Abgusses aufgedrückt werden.

20. Verfahren nach Anspruch 18 oder 19, wobei der erste Formungskammerteil (30) auf der Oberfläche in einer Position fixiert wird, so dass der Einlass (9) am im Wesentlichen untersten Teil der gebildeten Formungskammer (16) platziert wird.

21. Verfahren nach irgendeinem der Ansprüche 18 bis 20, wobei der erste Formungskammerteil (30) auf der Oberfläche fixiert wird, so dass ein Auslass (20, 21) zum Herauslassen von Fluid in der Nähe vom obersten Teil von jedem wesentlichen Hohlraum oder Einschnitt, gebildet in der Formungskammer (16), platziert wird.

22. Verfahren nach irgendeinem der Ansprüche 18 bis 21, zusätzlich umfassend den Schritt des Reduzierens des Volumens der gebildeten Formungskammer (16), wobei der Schritt des Reduzierens des Volumens der Formungskammer (16) nach Einführung von Formungsmaterial in die Formungskammer (16) durchgeführt wird.

23. Verfahren nach Anspruch 22, wobei der Schritt des Reduzierens des Volumens der Formungskammer (16) eine Bewegung einer beweglichen Platte (18) innerhalb der Formungskammer zur Oberfläche hin umfasst.

24. Verfahren nach Anspruch 22, wobei der Schritt des Reduzierens des Volumens der Formungskammer (16) eine Ausübung einer Kraft auf den ersten Formungskammerteil in der Richtung der Oberfläche umfasst.

25. Verfahren nach irgendeinem der Ansprüche 18 bis 24, zusätzlich umfassend den Schritt des Einsetzens eines zweiten Formungskammerteils (10), der vor dem Schritt des Fixierens des ersten Formungskammerteils (30) auf der Oberfläche für das Einsetzen in den Durchgang in einer Oberfläche angepasst wird.

26. Verfahren nach irgendeinem der Ansprüche 18 bis 25, zusätzlich umfassend einen zusätzlichen Formungsabschnitt (502).

27. Verfahren nach Anspruch 26, wobei der zusätzliche Formungsabschnitt (502) umfasst:
• einen ersten Formungskammerteil (30), der für eine Abriegelung eines vorbestimmten Teils der Oberfläche angepasst wird;
• Fixiermittel zum Fixieren des ersten Formungskammerteils (30) auf der Oberfläche, so dass der erste Formungskammerteil (30) zusammen mit der Oberfläche eine Formungskammer (16) bildet; und
• einen die Einführung von Formungsmaterial in die Formungskammer (16) erlaubenden Einlass (9);
• zumindest einen Auslass (20, 21), welcher dafür ausgelegt wird, um jedes in der Formungskammer (16) vorhandene Fluid aus der Formungskammer (16) herauszulassen;
zumindest ein Probestück (17) mit Oberflächendefekten, aufweisend wohlbekannte Merkmale zur Herstellung zumindest eines Abdrucks auf dem Abguss der Oberfläche.

## Revendications

1. Dispositif de moulage (100) pour faire une coulée d'une surface, le dispositif de moulage (100) comprenant:
• une première partie de chambre de moulage (30) adaptée pour sceller une portion prédéterminée de la surface;
• des moyens de fixation pour la fixation de ladite première partie de chambre de moulage (30) à la surface si bien que ladite première partie de chambre de moulage (30) ainsi que la surface forment une chambre de moulage (16); et
• une entrée (9) permettant l'introduction de matière à mouler dans ladite chambre de moulage (16);
• au moins une sortie (20, 21) agencée pour laisser sortir tout fluide présent dans ladite chambre de moulage (16) depuis ladite chambre de moulage (16);
**caractérisé en ce que** le dispositif de moulage (100) comprend en outre:
• au moins un échantillon (17) avec des défauts de surface ayant des caractéristiques bien connues pour faire au moins une empreinte sur ladite coulée de ladite surface.

2. Dispositif de moulage selon la revendication 1, dans lequel ledit au moins un échantillon (17) avec des défauts de surface ayant des caractéristiques bien connues est arrangé si bien qu'il laisse une empreinte sur un côté de la coulée, détourné de ladite surface.

3. Dispositif de moulage selon l'une quelconque des revendications 1 à 2, dans lequel la première partie de chambre de moulage (30) comprend en outre ledit au moins un échantillon (17) avec des défauts de surface ayant des caractéristiques bien connues.

4. Dispositif de moulage selon l'une quelconque des revendications 1 à 3, dans lequel ladite première partie de chambre de moulage (30) est agencée pour être fixée à la surface dans une position si bien que ladite entrée (9) est placée à la partie essentiellement la plus basse de ladite chambre de moulage (16) formée.

5. Dispositif de moulage selon l'une quelconque des revendications 1 à 4, dans lequel ladite première partie de chambre de moulage (30) est agencée si bien que quand elle est fixée à la surface, une sortie (20, 21) pour laisser sortir le fluide est située près de la partie supérieure de toute cavité substantielle ou d'une indentation formée dans la chambre de moulage (16).

6. Dispositif de moulage selon l'une quelconque des revendications 1 à 5, dans lequel le dispositif de moulage (100) comprend en outre un moyen (18) pour réduire le volume de la chambre de moulage formée.

7. Dispositif de moulage selon la revendication 6, dans lequel le moyen (18) pour réduire le volume de la chambre de moulage comprend une plaque mobile (18) dans la chambre de moulage et des moyens pour déplacer la plaque mobile (18) vers la surface.

8. Dispositif de moulage selon la revendication 7, dans lequel la plaque mobile (18) comprend en outre ledit au moins un échantillon (17) avec les défauts de surface ayant des caractéristiques bien connues.

9. Dispositif de moulage selon la revendication 6, dans lequel le moyen pour réduire le volume de la chambre de moulage comprend un grand élément d'étanchéité flexible agencé pour être placé entre la première partie de chambre de moulage et la surface et des moyens pour appliquer une force à la première partie de chambre de moulage dans la direction de la surface après la fixation de la première chambre de moulage à la surface.

10. Dispositif de moulage selon l'une quelconque des revendications 1 à 9, dans lequel le dispositif de moulage (100) est adapté à la géométrie d'une surface comprenant un passage, en ce que le dispositif de moulage (100) comprend en outre une deuxième partie de chambre de moulage (10) adaptée pour être insérée dans le passage.

11. Dispositif de moulage (100) selon la revendication 10, dans lequel le dispositif de moulage (100) comprend en outre un arbre (13) reliant la première partie de chambre de moulage (30) à la deuxième partie de moulage de chambre (10).

12. Dispositif de moulage (100) selon la revendication 11, dans lequel l'arbre (13) comprend un premier canal (14) avec deux extrémités, dont l'une extrémité est agencée pour être une sortie (20) pour laisser passer le fluide depuis la chambre de moulage (16) dans le canal (14) et dont l'autre extrémité est agencée pour être une sortie (24) pour laisser sortir le fluide depuis le canal (14).

13. Dispositif de moulage (100) selon la revendication 11 ou 12, dans lequel la deuxième partie de moulage (10) est un élément expansible, et dans lequel l'arbre (13) comporte en outre un deuxième canal (14a) avec deux extrémités, dont l'une extrémité est agencée pour être une entrée (23) de fluide sous pression et l'autre extrémité est une sortie à l'intérieur de l'élément expansible.

14. Dispositif de moulage (100) selon l'une quelconque des revendications 1 à 13, dans lequel la première partie de chambre de moulage (30) comprend en outre une marque (19) agencée pour faire une empreinte sur une coulée pour indiquer l'orientation du dispositif de moulage (100) par rapport à une orientation connue.

15. Dispositif de moulage (100) selon l'une quelconque des revendications 1 à 13, dans lequel la plaque mobile (18) comprend en outre une marque (19) agencée pour faire une empreinte sur une coulée pour indiquer l'orientation du dispositif de moulage (100) par rapport à une orientation connue.

16. Dispositif de moulage (100) selon l'une quelconque des revendications 1 à 15, dans lequel le dispositif de moulage comprend une section supplémentaire de moulage (502).

17. Dispositif de moulage (100) selon la revendication 16, dans lequel la section supplémentaire de moulage (502) comprend:
• une première partie de chambre de moulage (30) adaptée pour sceller une portion prédéterminée de la surface;
• des moyens de fixation pour la fixation de ladite première partie de chambre de moulage (30) à la surface si bien que ladite première partie de chambre de moulage (30) ainsi que la surface forment une chambre de moulage (16); et
• une entrée (9) permettant l'introduction de matière à mouler dans ladite chambre de moulage (16);
• au moins une sortie (20, 21) agencée pour laisser sortir tout fluide présent dans ladite chambre de moulage (16) depuis ladite chambre de moulage (16);
• au moins un échantillon (17) avec des défauts de surface ayant des caractéristiques bien connues pour faire au moins une empreinte sur ladite coulée de ladite surface.

18. Procédé de fabrication d'une coulée d'au moins une portion d'une surface au moyen d'un dispositif de moulage (100) comprenant les étapes de:
• placer une première partie de chambre de moulage (30) sur une surface, où la première partie de chambre de moulage (30) est adaptée pour sceller une portion prédéterminée de la surface;
• fixer ladite première partie de chambre de moulage (30) à la surface si bien que ladite première partie de chambre de moulage (30) ainsi que la surface forment une chambre de moulage (16); et
• introduire de la matière à mouler par une entrée (9) dans ladite chambre de moulage (16);
• laisser sortir tout fluide présent depuis ladite chambre de moulage (16) par au moins une sortie (20, 21) agencée pour laisser sortir tout fluide présent dans ladite chambre de moulage (16);
**caractérisé en ce que** le procédé comprend en outre l'étape de:
• marquer ladite coulée avec au moins un échantillon (17) avec des défauts de surface ayant des caractéristiques bien connues pour faire au moins une empreinte sur ladite coulée de ladite surface.

19. Procédé selon la revendication 18, dans lequel la première partie de chambre de moulage (30) comprend en outre ledit au moins un échantillon (17) avec des défauts de surface ayant des caractéristiques bien connues, lesdites caractéristiques bien connues étant imprimées sur un côté de la coulée, détourné de ladite surface.

20. Procédé selon la revendication 18 ou 19, dans lequel ladite première partie de chambre de moulage (30) est fixée à la surface dans une position si bien que ladite entrée (9) est située à la partie essentiellement la plus basse de ladite chambre de moulage (16) formée.

21. Procédé selon l'une quelconque des revendications 18 à 20, dans lequel ladite première partie de chambre de moulage (30) est fixée à la surface si bien qu'une sortie (20, 21) pour laisser sortir le fluide est située près de la partie supérieure de toute cavité substantielle ou indentation formée dans la chambre de moulage (16).

22. Procédé selon l'une quelconque des revendications 18 à 21, comprenant en outre l'étape de la réduction du volume de la chambre de moulage (16) formée, où l'étape de la réduction du volume de la chambre de moulage (16) est réalisée après l'introduction de matière à mouler dans ladite chambre de moulage (16).

23. Procédé selon la revendication 22, dans lequel l'étape de réduction du volume de la chambre de moulage (16) comprend le déplacement d'une plaque mobile (18) dans la chambre de moulage vers la surface.

24. Procédé selon la revendication 22, dans lequel l'étape de réduction du volume de la chambre de moulage (16) comprend l'application d'une force à la première partie de chambre de moulage dans la direction de la surface.

25. Procédé selon l'une quelconque des revendications 18 à 24, comprenant en outre l'étape d'insertion d'une deuxième partie de chambre de moulage (10) adaptée pour être insérée dans le passage dans une surface avant l'étape de fixation de la première partie de chambre de moulage (30) à la surface.

26. Procédé selon l'une quelconque des revendications 18 à 25, comprenant en outre une section supplémentaire de moulage (502).

27. Procédé selon la revendication 26, dans lequel la section supplémentaire de moulage (502) comprend:
• une première partie de chambre de moulage (30) adaptée pour sceller une partie prédéterminée de la surface;
• des moyens de fixation pour la fixation de ladite première partie de chambre de moulage (30) à la surface si bien que ladite première partie de chambre de moulage (30) ainsi que la surface forment une chambre de moulage (16); et
• une entrée (9) permettant l'introduction de matière à mouler dans ladite chambre de moulage (16);
• au moins une sortie (20, 21) agencée pour laisser sortir tout fluide présent dans ladite chambre de moulage (16) depuis ladite chambre de moulage (16);
• au moins un échantillon (17) avec des défauts de surface ayant des caractéristiques bien connues pour faire au moins une empreinte sur ladite coulée de ladite surface.
